(19) Europäisches Patentamt
European Patent Office
Office européen des brevets

(11) Veröffentlichungsnummer: **0 103 541**
**B1**

(12) # EUROPÄISCHE PATENTSCHRIFT

(45) Veröffentlichungstag der Patentschrift: **19.07.89**

(51) Int. Cl.[4]: **C 09 B 1/34**, D 06 P 1/40

(21) Anmeldenummer: **83810367.9**

(22) Anmeldetag: **17.08.83**

(54) **Anthrachinonfarbstoffe, deren Herstellung und Verwendung.**

(30) Priorität: **23.08.82 CH 5000/82**

(43) Veröffentlichungstag der Anmeldung: **21.03.84 Patentblatt 84/12**

(45) Bekanntmachung des Hinweises auf die Patenterteilung: **19.07.89 Patentblatt 89/29**

(84) Benannte Vertragsstaaten: **CH DE FR GB LI**

(56) Entgegenhaltungen:
**EP-A- 0 124 679**
**BE-A- 677 238**
**DE-A- 1 810 156**
**DE-B- 1 189 669**
**GB-A- 2 018 807**
**GB-A- 2 022 123**
**Die Akte enthält technische Angaben, die nach dem Eingang der Anmeldung eingereicht wurden und die nicht in dieser Patentschrift enthalten sind.**

(73) Patentinhaber: **CIBA-GEIGY AG**
**Klybeckstrasse 141**
**CH-4002 Basel (CH)**

(72) Erfinder: **Adam, Jean-Marie, Dr.**
**Rue de Village Neuf 60 D**
**F-68300 Rosenau (FR)**
Erfinder: **Bloch, Peter, Dr.**
**Ob. Brieschhalden 4**
**CH-4132 Muttenz (CH)**

**EP 0 103 541 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft neue wasserlösliche Anthrachinonfarbstoffe, Verfahren zur Herstellung dieser Farbstoffe und deren Verwendung zum Färben oder Bedrucken von Textilmaterialien, vor allem von natürlichen und synthetischen Polyamidmaterialien.

Saure Anthrachinonfarbstoffe werden seit langem für das Färben und Bedrucken von textilen Fasermaterialien, insbesondere von natürlichen und synthetischen Polyamidfasern, eingesetzt.

Viele bekannte saure Anthrachinonfarbstoffe sind für das Färben und Bedrucken von polyamidhaltigem Fasermaterial aber nur bedingt verwendbar. Denn oft ist das Ziehvermögen derartiger Farbstoffe ungenügend, so dass nur Färbungen von höchstens mittlerer Farbtiefe auf wirtschaftliche Weise erzeugt werden können ; und ausserdem genügen manche dieser Farbstoffe den heutigen, hohen Echtheitsanforderungen, besonders in den Nassechtheiten, nicht mehr. Es bestand somit ein Bedürfnis nach verbesserten Anthrachinonfarbstoffen der genannten färberischen Klasse.

Der vorliegenden Erfindung lag daher die Aufgabe zugrunde, neue blaue Anthrachinonfarbstoffe zu finden, die besonders zum Färben von natürlichen und synthetischen Polyamiden aus wässerigem Bad oder zum Bedrucken geeignet sind, die ferner einen hohen Ausziehgrad und ausserdem verbesserte Nassechtheitseigenschaften aufweisen.

Es wurde nun gefunden, dass die weiter unten definierten neuen wasserlöslichen, sauren Anthrachinonfarbstoffe die gestellte Aufgabe erfüllen.

Gegenstand der Erfindung sind Farbstoffe der Formel

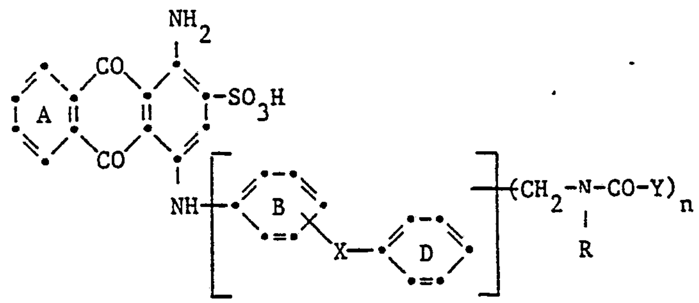

(1)

worin X Sauerstoff oder Schwefel, R Wasserstoff oder $C_{1-4}$-Alkyl, Y ein gegebenenfalls substituierter Arylrest, und n = 1, 2 oder 3 ist, der Benzolring A durch Halogen substituiert sein kann, und die Benzolringe B und D unabhängig voneinander durch Halogen, $C_{1-4}$-Alkyl, $C_{1-4}$-Alkoxy oder einen Rest der Formel $-(O-CH_2CH_2)-O-R_1$ worin $R_1$ Wasserstoff, Methyl oder Aethyl ist, substituiert sein können.

Für R als $C_{1-4}$-Alkyl kommen in Betracht: Methyl, Aethyl, Propyl, Isopropyl, Butyl, Isobutyl, sec.-Butyl und tert.-Butyl.

Der Arylrest Y ist z. B. ein Benzol-, Naphthalin-, Diphenyl-, Diphenyläther-, Diphenylamin- oder Diphenylketonrest. Der Arylrest Y kann weitersubstituiert sein, z. B. durch Alkylgruppen mit 1 bis 4 Kohlenstoffatomen, wie Methyl, Aethyl, Propyl, Isopropyl, Butyl, Isobutyl, sec.-Butyl und tert.-Butyl, Alkoxygruppen mit 1 bis 4 Kohlenstoffatomen, wie Methoxy, Aethoxy, Propyloxy, Isopropyloxy, Butyloxy, Isobutyloxy, sec.-Butyloxy und tert.-Butyloxy, Phenoxy, Alkanoylaminogruppen mit 2 bis 6 Kohlenstoffatomen, wie Acetylamino oder Propionylamino, Benzoylamino, Aminogruppen, wie $-NH_2$, Methylamino, Aethylamino, Dimethylamino, Diäthylamino, Cyanäthylamino, Hydroxyäthylamino, Dihydroxyäthylamino, Cyclohexylamino, Benzylamino und Phenylamino, Carbonsäureestergruppen, wie Methoxycarbonyl und Aethoxycarbonyl, Trifluormethyl, Nitro, Cyan, Acetyl, Methylsulfonyl, Carbamoyl, Sulfamoyl, Ureido, Hydroxy, Carboxy, Sulfo, Sulfomethyl und Halogen, wie Fluor, Chlor und Brom.

Die Farbstoffe der Formel (1) können 1 bis 3 Aroylaminomethyl-Reste enthalten, diese sind an den Benzolring B und/oder an den Benzolring D gebunden.

Als Halogensubstituent am Benzolring A kommt Fluor, Chlor oder Brom in Betracht, dieser befindet sich vorzugsweise in 6- oder 7-Stellung.

Mögliche Substituenten an den Benzolringen B und D sind : Fluor, Chlor, Brom, Methyl, Aethyl, Propyl, Isopropyl, Butyl, Isobutyl, sec.-Butyl, tert.-Butyl, Methoxy, Aethoxy, Propyloxy, Isopropyloxy, Butyloxy, Isobutyloxy, sec.-Butyloxy, tert.-Butyloxy, β-Hydroxy-äthoxy, β-Methoxy-äthoxy, β-(β'-Methoxy-äthoxy)-äthoxy und β-(β'-Aethoxy-äthoxy)-äthoxy.

Bevorzugt sind :

a) Farbstoffe der Formel (1), worin Y ein gegebenenfalls substituierter Phenyl-, Diphenyl- oder Naphthylrest ist ;

b) Farbstoffe gemäss a), worin X Sauerstoff, und Y Phenyl, Diphenyl oder Naphthyl, das durch Halogen, Nitro, $C_{1-4}$-Alkyl oder $C_{1-4}$-Alkoxy substituiert sein kann, ist, der Benzolring A durch Chlor substituiert sein kann, und die Benzolringe B und D unabhängig voneinander durch Halogen, $C_{1-4}$-Alkyl,

$C_{1-4}$-Alkoxy oder einen Rest der Formel $-(O-CH_2CH_2)-O-R_1$ worin $R_1$ Wasserstoff, Methyl oder Aethyl ist, substituiert sein können ;

c) Farbstoffe gemäss b), worin Y Phenyl, das durch Chlor, Nitro oder $C_{1-4}$-Alkyl substituiert sein kann, Diphenyl oder Naphthyl ist, die Benzolringe A und B unsubstituiert sind, und der Benzolring D durch $C_{1-4}$-Alkyl substituiert sein kann ;

d) Farbstoffe gemäss b) oder c), worin n = 1 ist ;

e) Farbstoff gemäss d) der Formel

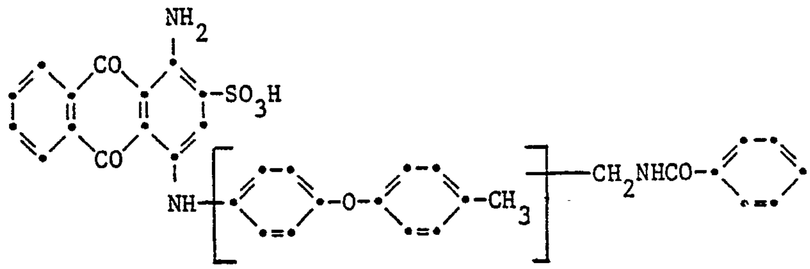

(2)

f) Farbstoffe gemäss b) oder c), worin n = 2 oder 3 ist ;

g) Farbstoff gemäss f), der Formel

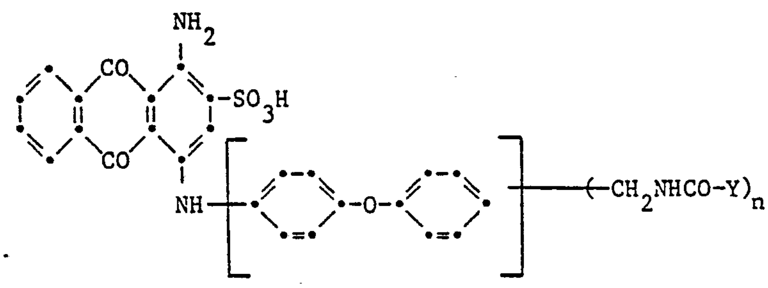

(3)

worin Y Phenyl, Chlorphenyl, Dichlorphenyl, Nitrophenyl, Dimethylphenyl, tert.-Butylphenyl, Diphenyl oder Naphthyl-(2) ist und n die unter f) angegebene Bedeutung hat ;

h) Farbstoff gemäss g), der Formel

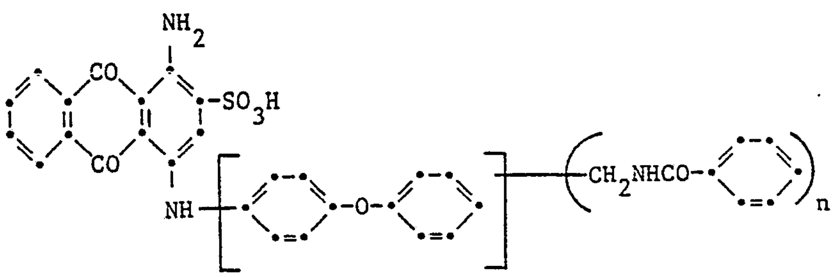

(4)

worin n = 2 oder 3 ist.

Die Herstellung der Farbstoffe der Formel (1) ist dadurch gekennzeichnet, dass man eine Anthrachinonverbindung der Formel

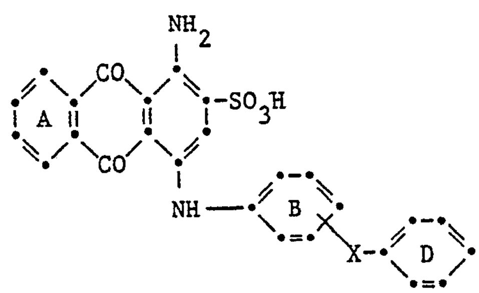

(5)

mit n Mol einer den Rest der Formel

$$-CH_2-\underset{\underset{R}{|}}{N}-CO-Y \qquad (6)$$

einführenden Verbindung umsetzt.

Als den Rest der Formel (6) einführende Verbindungen verwendet man insbesondere N-Methylolamide der Formel

$$HO-CH_2-\underset{\underset{R}{|}}{N}-CO-Y \qquad (7)$$

oder wie diese Methylolverbindungen reagierende funktionelle Abkömmlinge der eine Methylolgruppe aufweisenden Verbindungen.

Die Umsetzung der Anthrachinonverbindung der Formel (5) mit der den Rest der Formel (6) einführenden Verbindung ist so auszuführen, dass mindestens ein Rest der Formel (6) eingeführt wird. Die Farbstoffe der Formel (1) können definitionsgemäss auch zwei oder drei Reste der Formel (6) enthalten. Diese können an den Benzolring B und/oder D gebunden sein. Es können somit auch zwei oder drei Reste der Formel (6) an nur einen der beiden Benzolringe, B oder insbesondere D, gebunden sein. Wie viele Reste der Formel (6) bei der Umsetzung der Anthrachinonverbindung der Formel (5) mit der N-Methylolverbindung bzw. einem reaktionsfähigen Derivat derselben in die Anthrachinonverbindung der Formel (5) eintreten, und an welchen Stellen dies geschieht, ist vor allem von der Art der an die Benzolringe B und D gebundenen Substituenten abhängig. Bedingung ist, dass die Benzolringe B und D mindestens ein ersetzbares Wasserstoffatom enthalten, um mit der N-Methylolverbindung reagieren zu können. Vielfach kann auch durch die Wahl geeigneter Umsetzungsbedingungen die Zahl der eintretenden Reste der Formel (6) beeinflusst oder bestimmt werden. Je nucleophiler die Benzolringe B und D unter den Umsetzungsbedingungen sind, desto leichter geht die Kondensation mit der N-Methylolverbindung vonstatten, und desto bessere Ausbeuten und einheitlichere Kondensationsprodukte werden erhalten.

Die als Ausgangsprodukte verwendeten Anthrachinonverbindungen der Formel (5) können in bekannter Weise durch Kondensation von 1-Amino-4-bromanthrachinon-2-sulfonsäure mit entsprechenden Aminodiphenyläthern bzw. Aminodiphenylthioäthern hergestellt werden.

Als Beispiele verwendbarer Aminodiphenyläther bzw. Aminodiphenylthioäther seien genannt :

4-Amino-diphenyläther(p-Amino-diphenyläther),
4-Amino-4′-methyl-diphenyläther,
4-Amino-4′-chlor-diphenyläther,
4-Amino-3-methoxy-diphenyläther,
3-Amino-diphenyläther(m-Amino-diphenyläther),
4-Amino-3,5-dimethyl-diphenyläther,
4-Amino-3,4′,5-trimethyl-diphenyläther,
2-Amino-3-methyl-diphenyläther,
2-Amino-3,5-dimethyl-diphenyläther,
2-Amino-4-chlor-diphenyläther,
4-Amino-4′-tert.-butyl-diphenyläther,
4-Amino-diphenylthioäther,
4-Amino-4′-äthyl-diphenyläther,
4-Amino-4′-isopropyl-diphenyläther,
4-Amino-4′-neopentyl-diphenyläther,
4-Amino-4′-methyl-diphenylthioäther,
4-Amino-4′-chlor-diphenylthioäther,
4-Amino-2′-methyl-diphenyläther,
4-Amino-3-methyl-diphenyläther.

Die als zweite Reaktionskomponente in Frage kommenden Aroyl-N-methylolamide erhält man durch Addition von Formaldehyd an die entsprechenden aromatischen Monocarbonsäureamide unter Mitwirkung basischer Kondensationsmittel, beispielsweise Kaliumcarbonat, oder auch durch Einwirkung von Mineralsäure unter milden Bedingungen. Als aromatische Monocarbonsäureamide verwendet man primäre Amide von ein- oder mehrkernigen Monocarbonsäuren, beispielsweise solche von Benzol-, Naphthalin-, Diphenyl-, Diphenyläther-, Diphenylamin- oder Diphenylketon-monocarbonsäuren. Es können auch Gemische von Carbonsäureamiden verwendet werden, beispielsweise die Amide von Gemischen aromatischer Monocarbonsäuren, welche man durch Oxydation eines Benzolhomologengemisches oder eines Gemisches halogenierter Toluole erhält, oder die durch Chlorierung von Benzoylchlorid zugänglich sind.

Als Beispiele für N-Methylolamide der Formel (7) seien genannt :

N-Methylolbenzamid,
N-Methylol-2,4-dichlorbenzamid,
N-Methylol-(4-tert.-butyl)-benzamid,
N-Methylol-2-chlorbenzamid,
N-Methylol-4-chlorbenzamid,
N-Methylol-4-nitrobenzamid,
N-Methylol-2-nitrobenzamid,
N-Methylol-2-brombenzamid,
N-Methylol-2,4-dibrombenzamid,
N-Methylol-2,4-dimethylbenzamid,
N-Methylol-3,4-dimethylbenzamid,
N-Methylol-3-brombenzamid,
N-Methylol-4-methylbenzamid,
N-Methylol-3-methylbenzamid,
N-Methylol-2-methylbenzamid,
N-Methylol-3-nitrobenzamid,
N-Methylol-N-methylbenzamid,
N-Methylol-diphenylcarbonsäureamid,
N-Methylol-naphthalin-2-carbonsäureamid,
N-Methylol-dichlorbenzamid, erhalten aus einer technischen Dichlorbenzoesäure, die durch Chlorierung und Oxydation von Toluol dargestellt wurde und neben Trichlorbenzoesäure vorwiegend aus 2,4- bzw. 2,6-Dichlorbenzoesäure besteht.

Für das vorliegende Verfahren kommt vor allem die N-Methylolverbindung eines Benzolmonocarbonsäureamids in Betracht. Vorzugsweise verwendet man das N-Methylolbenzamid.

Die Kondensation der Anthrachinonverbindungen der Formel (5) mit den einen Rest der Formel (6) einführenden Verbindungen, z. B. den N-Methylolamiden der Formel (7), erfolgt zweckmässig in saurem Medium, z. B. in Gegenwart saurer Kondensationsmittel oder wie solche reagierender wasserabspaltender Mittel. Derartige Kondensationsmittel sind beispielsweise konzentrierte Salzsäure, Zinkchlorid, Phosphorpentoxid, Essigsäureanhydrid, Polyphosphorsäure und Oleum. Das bevorzugte Kondensationsmittel ist 80 %ige bis wasserfreie Schwefelsäure, vorzugsweise 90 %ige Schwefelsäure, da diese meist gleichzeitig als Lösungsmittel für die Umsetzungspartner dienen kann. Die Umsetzungstemperatur kann innerhalb weiter Grenzen variieren und hängt vor allem von dem verwendeten Kondensationsmittel ab. In konzentrierter Schwefelsäure verläuft die Reaktion schon bei etwa 0 °C, vorzugsweise jedoch bei Raumtemperatur (20 bis 25 °C), rasch und vollständig ; in einigen Fällen ist das Arbeiten bei leicht erhöhter Temperatur, z. B. bis zu 60 °C, nötig, insbesondere dann, wenn mehrere Aroylaminomethylgruppen eingeführt werden sollen. Die Reaktionsprodukte werden z. B. durch Eingiessen der schwefelsauren Lösungen oder Suspensionen in Eiswasser abgeschieden und auf übliche Art in die wässerlöslichen Alkalimetallsalze, vor allem in die Natriumsalze, übergeführt, wonach diese Salze isoliert werden.

An Stelle der Arylcarbonsäure-N-methylolamide können auch reaktionsfähige funktionelle Derivate dieser Methylolverbindungen verwendet werden, sofern sie gleichartig reagieren. Es kommen beispielsweise die durch Behandlung der Methylolverbindungen mit anorganischen oder organischen Säuren oder Säurehalogeniden oder -anhydriden erhältlichen Ester in Betracht. Insbesondere kommen als reaktionsfähige funktionelle Abkömmlinge der N-Methylolamide der Formel (7) die reaktionsfähigen Ester dieser Verbindungen mit starken Säuren, wie die N-(Chlormethyl)- oder N-(Brommethyl)-amide, in Frage. Man erhält diese Ester z. B. durch Einwirkung von Thionylchlorid bzw. Thionylbromid auf die genannten Methylolamide. Andere geeignete reaktionsfähige Abkömmlinge der N-Methylolamide der Formel (7) sind z. B. die aus diesen Methylolverbindungen in Gegenwart von beispielsweise Phosphoroxychlorid durch Selbstkondensation erhältlichen Di-(aroylamidomethyl)-äther. Da diese reaktionsfähigen funktionellen Derivate aber meistens aus den entsprechenden Methylolverbindungen hergestellt werden müssen, werden die letzteren als Umsetzungskomponente durchweg bevorzugt. Es ist jedoch möglich, mit diesen Derivaten, vor allem mit den N-Chlormethylamiden, in Einzelfällen, in denen mit den Methylolverbindungen unbefriedigende Resultate erhalten werden, zum Ziel zu gelangen. In einigen Fällen kann man das Verfahren mit gutem Erfolg dadurch vereinfachen, dass man, statt von dem fertigen N-Methylolamid auszugehen, ein Gemisch der Anthrachinonverbindung der Formel (5) mit Formaldehyd oder einem Polymeren davon und dem Aroylamid in einem Eintopfverfahren zur Umsetzung bringt.

An Stelle der N-Methylolamide der Formel (7) bzw. ihrer reaktionsfähigen funktionellen Abkömmlinge kann in manchen Fällen ein Reaktionsprodukt von $\alpha,\alpha'$-Dihalogendimethyläther, wie $\alpha,\alpha'$-Dichlor- oder $\alpha,\alpha'$-Dibromdimethyläther, mit den Amiden der Formel

HN - CO - Y
|
R (8)

oder in manchen Fällen auch mit den Nitrilen der Formel

$$N{\equiv}C{-}Y \qquad (9)$$

(die unter den Reaktionsbedingungen zu den genannten Amiden verseift werden), wie Acetonitril, Propionitril, Benzoesäurenitril in Schwefelsäure, verwendet werden. Hierbei arbeitet man vorteilhaft in konzentrierter (90 bis 100 %iger) Schwefelsäure.

Für diese Verfahrensvariante brauchbare Nitrile bzw. Aroylamide sind z. B.:

Benzonitril, 2-Chlorbenzonitril, 4-Chlorbenzonitril, 2,4-Dichlorbenzonitril, 3-Brombenzonitril, 3-Nitro-4-methylbenzamid, Benzamid und 4-(tert.-Butyl)-benzamid.

Ein abgeändertes Verfahren zur Herstellung der Farbstoffe der Formel (1) besteht darin, die Anthrachinonverbindungen aus Vorprodukten aufzubauen, von denen das eine bereits mindestens einen Rest der Formel (6) enthält. Dies geschieht dadurch, dass man beispielsweise 1-Amino-4-bromanthrachinon-2-sulfonsäure mit einem Aminodiphenyläther, der einen Rest der Formel (6) als Substituenten enthält, nach an sich bekannten Methoden kondensiert.

Die Farbstoffe der Formel (1) sind neu. Sie eignen sich besonders zum Färben und Bedrucken von polypeptidgruppenhaltigem Fasermaterial, z. B. synthetischen Polyamiden, Polyurethanen, Wolle, Seide und Leder. Die Farbstoffe ziehen auf diese Materialien aus saurem wässrigen Bad sehr gleichmässig auf. Sie weisen schon in schwach saurer bis neutraler wässriger Lösung zu den genannten N-haltigen Fasern eine hohe Affinität auf und besitzen daher ein sehr gutes Ziehvermögen.

Die Farbstoffe zeigen auf synthetischen Polyamidfasern, aus neutralem bis schwach saurem Bad gefärbt, ein sehr gutes Ziehvermögen und ergeben egale, brillante blaue Färbungen. Sie eignen sich auch zum Färben nach dem Hochtemperaturfärbeverfahren.

Die Färbungen auf synthetischen Polyamidfasern zeichnen sich durch gute Lichtechtheit und gute Nassechtheiten, wie Wasser-, Wasch- und Schweissechtheit, aus. Die Farbstoffe eignen sich ferner im Gemisch mit anderen sauren Farbstoffen zur Erzeugung von Kombinationsfärbungen.

Gegenüber den nächstvergleichbaren bekannten sauren Anthrachinonfarbstoffen aus DE-B/C-1 189 699 und DE-C-1 810 156, welche in 4-Stellung des Anthrachinonkerns statt eines Aminodiphenyläther-Restes einen Phenylaminorest enthalten, bzw. welche in 2-Stellung des Anthrachinonkerns statt einer Sulfogruppe ein Halogenatom enthalten und im Aminodiphenyläther-Rest in 4-Stellung des Anthrachinonkerns ausserdem sulfiert sind, besitzen die Farbstoffe der Formel (1) überraschenderweise auf synthetischen Polyamidfasern ein wesentlich besseres Ziehvermögen, ein besseres Migrationsverhalten eine schnellere Penetration und vielfach auch bessere Nassechtheiten.

Die folgenden Beispiele veranschaulichen die Erfindung. Die in den Beispielen angegebenen Teile sind, sofern nichts anderes angegeben ist, Gewichtsteile. Diese verhalten sich zu Volumteilen wie Gramm zu Kubikzentimeter. Die Prozente sind Gewichtsprozente, und die Temperaturen sind in Celsiusgraden angegeben.

## Beispiel 1

51 Teile Kondensationsprodukt aus 1 Mol 1-Amino-4-bromanthrachinon-2-sulfonsäure und 1 Mol 4-Amino-4'-methyldiphenyläther welches der Formel

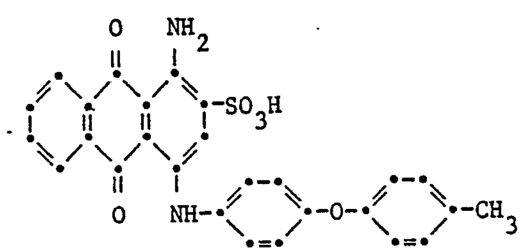

entspricht, werden mit 15 Teilen N-Methylolbenzamid vermischt und das Gemenge bei 0-5° in 300 Teile 90 %ige Schwefelsäure eingetragen. Das Gemisch wird während 20 Stunden bei 5° gerührt, worauf man es auf Eis giesst und den ausgefallenen Farbstoff der Formel

(Siehe Formel Seite 7 f.)

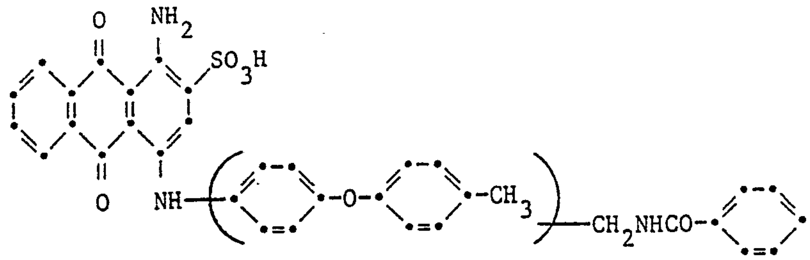

abfiltriert, neutral wäscht und trocknet. Das Natriumsalz färbt Polyamidfasern in blauen Tönen mit gutem Ausziehgrad und guten Nassechtheiten.

Beispiel 2

50 Teile Natriumsalz des Farbstoffes der Formel

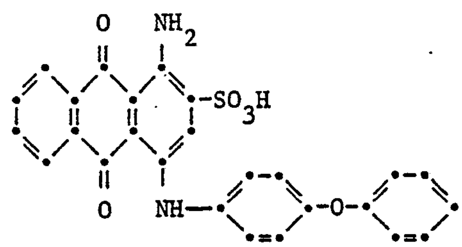

(erhalten durch Kondensation von 1 Mol 1-Amino-4-bromanthrachinon-2-sulfonsäure mit 1 Mol 4-Amino-diphenyläther) vermischt mit 30 Teilen N-Methylolbenzamid werden bei 0-5° in 300 Teile 90 %ige Schwefelsäure eingetragen, worauf man das Gemisch während 20 Stunden bei 0-5° rührt. Die Lösung wird auf Eis gegossen und die Fällung des Farbstoffes der Formel

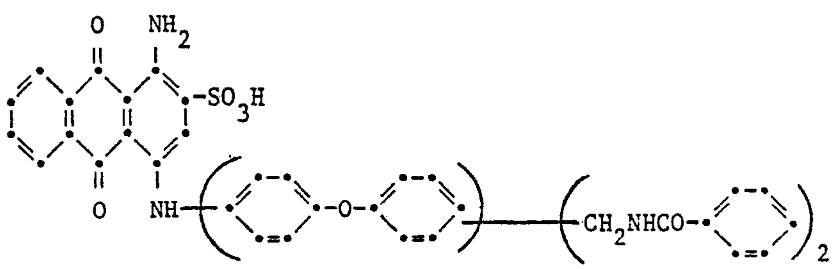

abfiltriert, neutral gewaschen und getrocknet. Das Natriumsalz färbt Polyamidfasern in blauen Tönen mit einem sehr guten Ausziehgrad und guten Nassechtheiten.

Verwendet man anstelle von 30 Teilen N-Methylolbenzamid 45 Teile N-Methylolbenzamid so erhält man bei sonst gleicher Verfahrensweise den Farbstoff der Formel

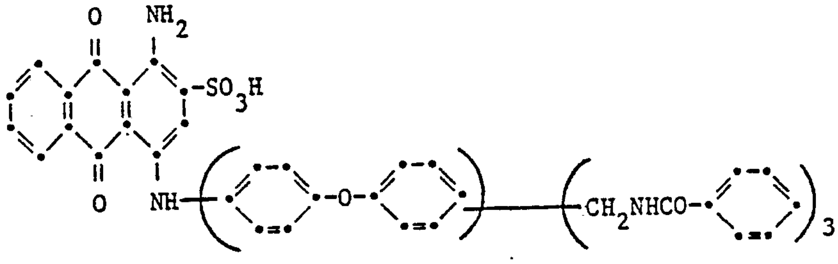

Verwendet man bei sonst gleichem Vorgehen an Stelle der vorgenannten Methylolverbindung äquivalente Teile N-Methylol-2-chlorbenzamid, N-Methylol-4-chlorbenzamid, N-Methylol-4-tert.-butylbenzamid, N-Methylol-2-nitrobenzamid, N-Methylol-2,4-dichlorbenzamid, N-Methylol-3,4-dimethylbenzamid, N-Methylol-diphenylcarbonsäureamid oder N-Methylolnaphthalin-2-carbonsäureamid, so erhält man Farbstoffe mit ähnlichen Eigenschaften.

Beispiel 3

Man bereitet ein Färbebad aus 4 000 Teilen Wasser, 4 Teilen Ammoniumacetat, 2 Teilen des Farbstoffes gemäss Beispiel 1 und soviel Essigsäure, dass der pH-Wert des Bades 6,0 beträgt. In das erhaltene Färbebad geht man mit 100 Teilen eines synthetischen Polyamidtricots ein, erhitzt es innerhalb einer halben Stunde zum Kochen und färbt 45 Minuten bei 100°. Man erhält eine blaue Färbung, die einen guten Ausziehgrad des Farbstoffes aufweist.

Beispiel 4

5 Teile des Farbstoffes gemäss Beispiel 2 werden in 50 Teilen kochenden Wassers angeteigt und mit 350 Teilen kochenden Wassers gelöst. Die Lösung wird in 500 Teile Verdickungsmittel (Guarderivat) eingerührt. Dann werden 3 Teile eines Egalisiermittels und 1,5 Teile eines Antischaummittels eingerührt, das Gewicht wird mit Wasser auf 1 000 Teile gestellt, und die Lösung wird mit Essigsäure angesäuert (pH 3,5). Die so hergestellte Druckpaste wird auf Polyamid-Teppich nach einem beliebigen Druckverfahren appliziert; die Drucke werden getrocknet und anschliessend in einem Dämpfer 2 Minuten bei 101° unter Sattdampfbedingungen fixiert. Die fixierten Drucke werden erst kalt, dann warm gewaschen und anschliessend lauwarm und kalt gespült. Das Waschwasser ist farblos.

## Patentansprüche

1. Farbstoffe der Formel

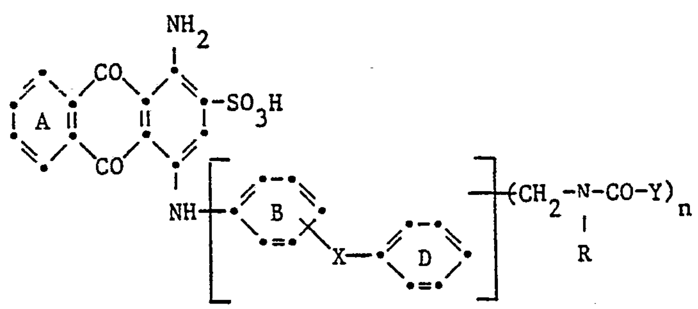

(1)

worin X Sauerstoff oder Schwefel, R Wasserstoff oder $C_{1-4}$-Alkyl, Y ein gegebenenfalls substituierter Arylrest, und n = 1, 2 oder 3 ist, der Benzolring A durch Halogen substituiert sein kann, und die Benzolringe B und D unabhängig voneinander durch Halogen, $C_{1-4}$-Alkyl, $C_{1-4}$-Alkoxy oder einen Rest der Formel $-(O-CH_2CH_2)-O-R_1$ worin $R_1$ Wasserstoff, Methyl oder Aethyl ist, substituiert sein können.

2. Farbstoffe gemäss Anspruch 1, worin Y ein gegebenenfalls substituierter Phenyl-, Diphenyl- oder Naphthylrest ist.

3. Farbstoffe gemäss Anspruch 2, worin X Sauerstoff, und Y Phenyl, Diphenyl oder Naphthyl, das durch Halogen, Nitro, $C_{1-4}$-Alkyl oder $C_{1-4}$-Alkoxy substituiert sein kann, ist, der Benzolring A durch Chlor substituiert sein kann, und die Benzolringe B und D unabhängig voneinander durch Halogen, $C_{1-4}$-Alkyl, $C_{1-4}$-Alkoxy oder einen Rest der Formel $-(O-CH_2CH_2)-O-R_1$ worin $R_1$ Wasserstoff, Methyl oder Aethyl ist, substituiert sein können.

4. Farbstoffe gemäss Anspruch 3, worin Y Phenyl, das durch Chlor, Nitro oder $C_{1-4}$-Alkyl substituiert sein kann, Diphenyl oder Naphthyl ist, die Benzolringe A und B unsubstituiert sind, und der Benzolring D durch $C_{1-4}$-Alkyl substituiert sein kann.

5. Farbstoffe gemäss Anspruch 3 oder 4, worin n = 1 ist.

6. Farbstoff gemäss Anspruch 5, der Formel

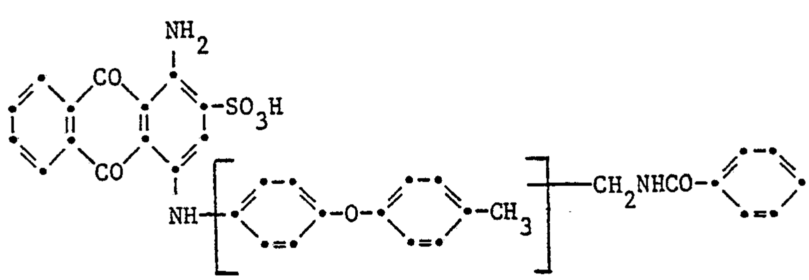

(2)

7. Farbstoffe gemäss Anspruch 3 oder 4, worin n = 2 oder 3 ist.

8. Farbstoffe gemäss Anspruch 7, der Formel

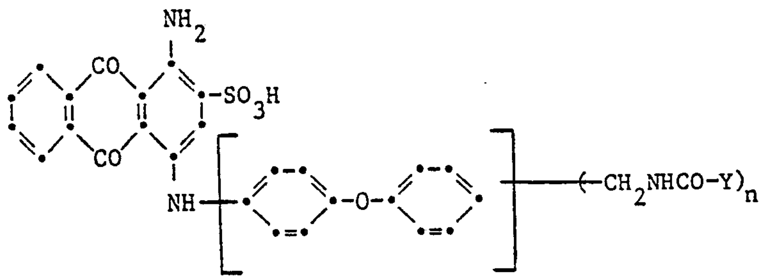

(3)

worin Y Phenyl, Chlorphenyl, Dichlorphenyl, Nitrophenyl, Dimethylphenyl, tert.-Butylphenyl, Diphenyl oder Naphthyl-(2) ist, und n die in Anspruch 7 angegebene Bedeutung hat.

9. Farbstoff gemäss Anspruch 8, der Formel

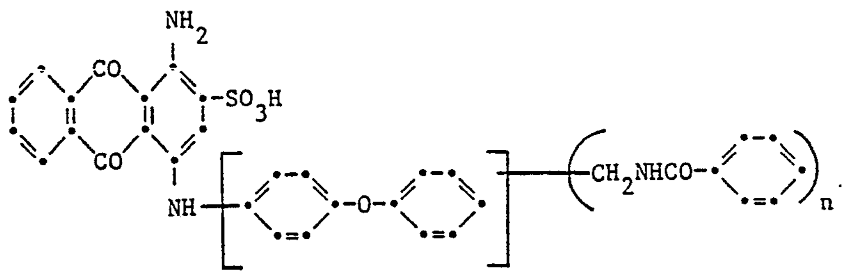

(4)

worin n = 2 oder 3 ist.

10. Verfahren zur Herstellung von Farbstoffen gemäss Anspruch 1, dadurch gekennzeichnet, dass man eine Anthrachinonverbindung der Formel

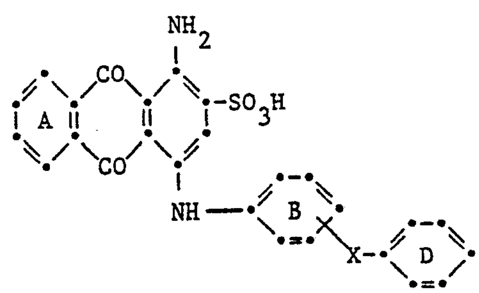

(5)

mit n Mol einer den Rest der Formel

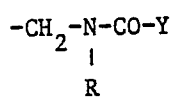

(6)

einführenden Verbindung umsetzt.

11. Verfahren gemäss Anspruch 10, dadurch gekennzeichnet, dass man als den Rest der Formel (6) einführende Verbindungen N-Methylolamide der Formel

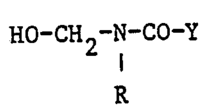

(7)

oder reaktionsfähige funktionelle Abkömmlinge der eine Methylolgruppe aufweisenden Verbindungen verwendet.

12. Verfahren gemäss Anspruch 11, dadurch gekennzeichnet, dass man die N-Methylolverbindung eines Benzolmonocarbonsäureamids verwendet.

13. Verfahren gemäss Anspruch 12, dadurch gekennzeichnet, dass man N-Methylolbenzamid verwendet.

14. Verwendung der Farbstoffe gemäss den Ansprüchen 1 bis 9, bzw. der gemäss den Ansprüchen 10 bis 13 erhältlichen Farbstoffe zum Färben oder Bedrucken.

15. Verwendung gemäss Anspruch 14, zum Bedrucken von synthetischen Polyamidfasern.

## Claims

1. A dye of the formula

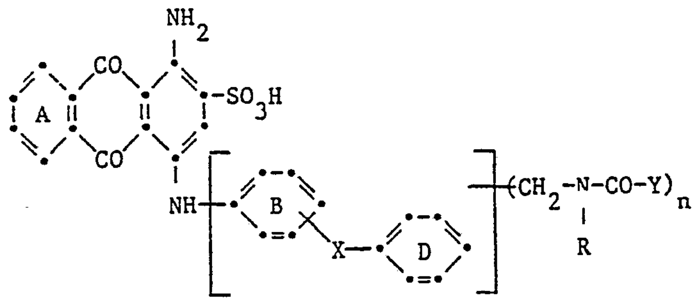

(1)

in which X is oxygen or sulfur, R is hydrogen or $C_1$-$C_4$alkyl, Y is an unsubstituted or substituted aryl radical, n is 1, 2 or 3, the benzene ring A may be substituted by halogen and the benzene rings B and D may each independently be substituted by halogen, $C_1$-$C_4$alkyl, $C_1$-$C_4$alkoxy or a radical of the formula $-(O-CH_2CH_2)-O-R_1$, in which $R_1$ is hydrogen, methyl or ethyl.

2. A dye according to claim 1, in which Y is an unsubstituted or substituted phenyl, diphenyl or naphthyl radical.

3. A dye according to claim 2, in which X is oxygen, and Y is phenyl, diphenyl or naphthyl, each of which may be substituted by halogen, nitro, $C_1$-$C_4$alkyl or $C_1$-$C_4$alkoxy, the benzene ring A may be substituted by chlorine and the benzene rings B and D may each independently be substituted by halogen, $C_1$-$C_4$alkyl, $C_1$-$C_4$alkoxy or a radical of the formula $-(O-CH_2CH_2)-O-R_1$, in which $R_1$ is hydrogen, methyl or ethyl.

4. A dye according to claim 3, in which Y is phenyl which may be substituted by chlorine, nitro or $C_1$-$C_4$alkyl, or is diphenyl or naphthyl, the benzene rings A and B are unsubstituted, and the benzene ring D may be substituted by $C_1$-$C_4$alkyl.

5. A dye according to either claim 3 or claim 4, in which n is 1.

6. A dye according to claim 5, of the formula

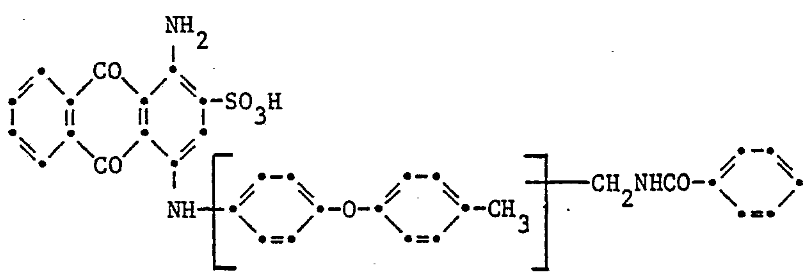

(2)

7. A dye according to either claim 3 or claim 4, in which n is 2 or 3.

8. A dye according to claim 7, of the formula

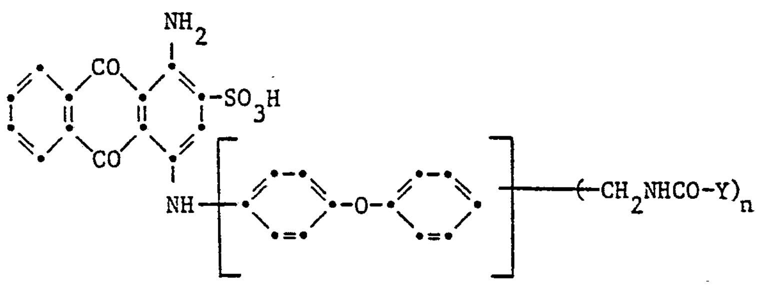

(3)

in which Y is phenyl, chlorophenyl, dichlorophenyl, nitrophenyl, dimethylphenyl, tert-butylphenyl, diphenyl or 2-naphthyl, and n is as defined in claim 7.

9. A dye according to claim 8, of the formula

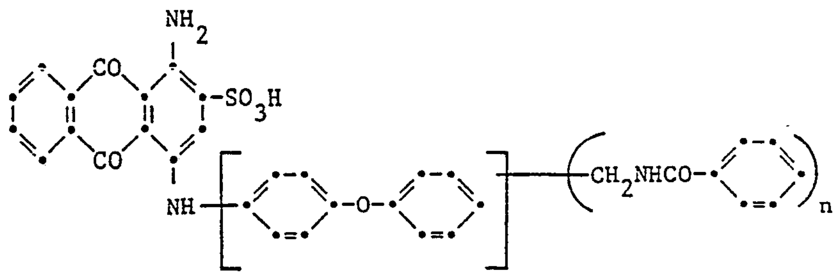

(4)

in which n is 2 or 3.

10. A process for the preparation of a dye according to claim 1, which comprises reacting an anthraquinone compound of the formula

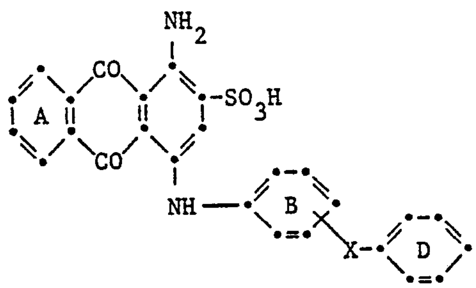

(5)

with n mol of a compound which introduces the radical of the formula

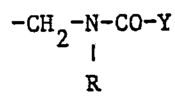

(6)

11. A process according to claim 10, wherein the compound which introduces the radical of the formula (6) is an N-methylolamide of the formula

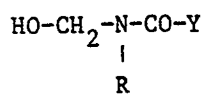

(7)

or a reactive functional derivative of a compound which contains a methylol group.

12. A process according to claim 11, which comprises the use of the N-methylol compound of a benzene monocarboxamide.

13. A process according to claim 12, which comprises the use of N-methylolbenzamide.

14. The use of a dye according to any one of claims 1 to 9 and obtainable according to any one of claims 10 to 13 for dyeing or printing.

15. The use according to claim 14 for printing synthetic polyamide fibres.

## Revendications

1. Colorants de formule

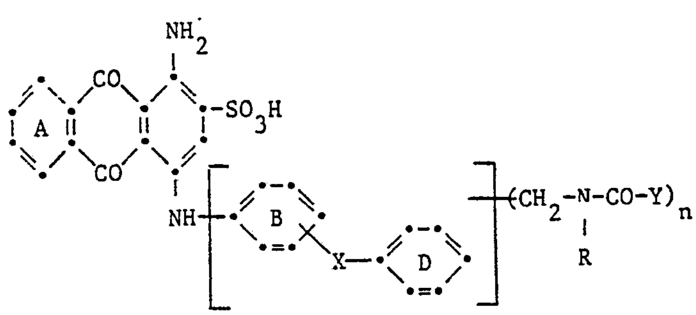

(1)

dans laquelle X est un atome d'oxygène ou de soufre, R est un atome d'hydrogène ou un groupe alkyle en $C_{1-4}$, Y est un radical aryle éventuellement substitué et n vaut 1, 2 ou 3, le noyau benzénique A peut être substitué par un atome d'halogène, et les noyaux benzéniques B et D peuvent être substitués, indépendamment l'un de l'autre, par un atome d'halogène ou par un groupe alkyle en $C_{1-4}$, alcoxy en $C_{1-4}$ ou par un radical de formule $-(O-CH_2CH_2)-O-R_1$ dans laquelle $R_1$ est un atome d'hydrogène ou le groupe méthyle ou éthyle.

2. Colorants selon la revendication 1, dans lesquels Y est un radical phényle, diphényle ou naphtyle éventuellement substitué.

3. Colorants selon la revendication 2, dans lesquels X est un atome d'oxygène et Y est un radical phényle, diphényle ou naphtyle qui peut être substitué par un ou des groupes halogéno, nitro, alkyle en $C_{1-4}$ ou alcoxy en $C_{1-4}$, le noyau benzénique A peut être substitué par un ou des atomes de chlore et les noyaux benzéniques B et D peuvent être substitués, indépendamment l'un de l'autre, par un ou des groupes halogéno, alkyle en $C_{1-4}$, alcoxy en $C_{1-4}$ ou par un radical de formule $-(O-CH_2CH_2)-O-R_1$, dans laquelle $R_1$ est un atome d'hydrogène ou le groupe méthyle ou éthyle.

4. Colorants selon la revendication 3, dans lesquels Y est un radical phényle qui peut être substitué par un atome de chlore ou par un groupe nitro ou alkyle en $C_{1-4}$, un radical diphényle ou naphtyle, les noyaux benzéniques A et B ne sont pas substitués et le noyau benzénique D peut être substitué par un groupe alkyle en $C_{1-4}$.

5. Colorants selon la revendication 3 ou 4, dans lesquels n vaut 1.

6. Colorant selon la revendication 5, de formule

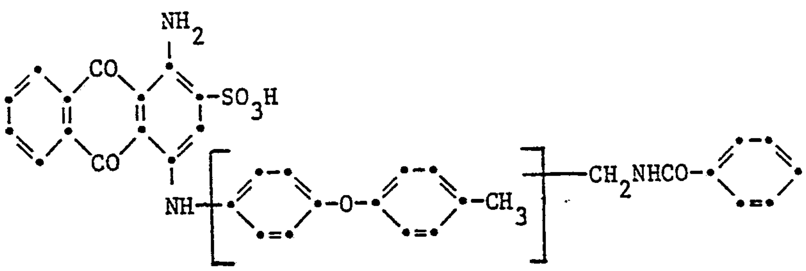

(2)

7. Colorants selon la revendication 3 ou 4, dans lesquels n vaut 2 ou 3.

8. Colorants selon la revendication 7, de formule

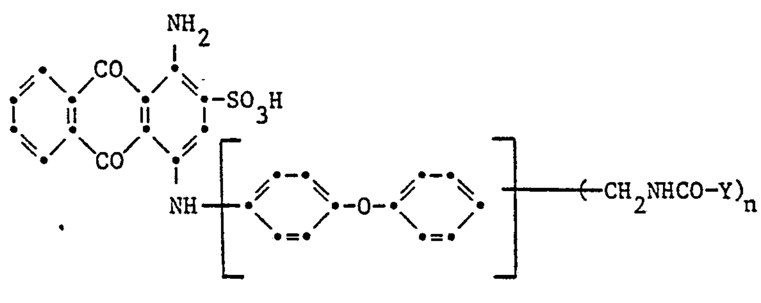

(3)

dans laquelle Y est un radical phényle, chlorophényle, dichlorophényle, nitrophényle, diméthylphényle, tert-butylphényle, diphényle ou naphtyle-2, et n a la signification donnée dans la revendication 7.

9. Colorants selon la revendication 8, de formule

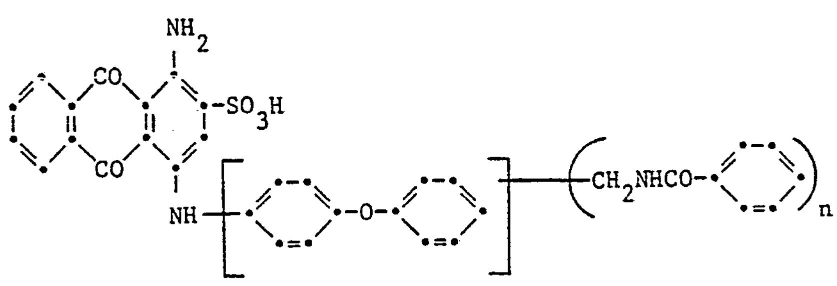

(4)

dans laquelle n vaut 2 ou 3.

10. Procédé pour la préparation de colorants selon la revendication 1, caractérisé par le fait que l'on fait réagir un composé anthraquinonique de formule

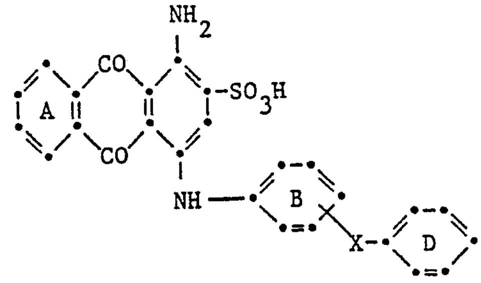

(5)

avec n moles d'un composé introduisant le reste de formule

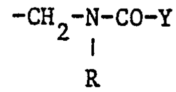

(6)

11. Procédé selon la revendication 10, caractérisé par le fait qu'en tant que composés introduisant le reste de formule (6), on utilise des N-méthylolamides de formule

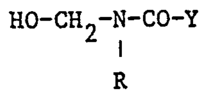

(7)

ou des dérivés fonctionnels réactifs des composés comportant un groupe méthylol.

12. Procédé selon la revendication 11, caractérisé par le fait que l'on utilise le composé N-méthylol d'un benzènemonocarboxamide.

13. Procédé selon la revendication 12, caractérisé par le fait que l'on utilise le N-méthylolbenzamide.

14. Utilisation des colorants selon la revendication 1 à 9, ou des colorants préparables selon les revendications 10 à 13, pour la teinture ou l'impression.

15. Utilisation selon la revendication 14, pour l'impression de fibres de polyamide synthétique.